# FASCICULE DE BREVET EUROPEEN

(11) **EP 0 762 039 B1**
(45) Date de publication et mention de la délivrance du brevet: **17.05.2000**
(21) Numéro de dépôt: 96401837.8
(22) Date de dépôt: 28.08.1996
(51) Int. Cl.: F16L 41/04

(54) **Procédé pour raccorder une conduite de dérivation à une canalisation principale**
Verfahren zum Verbinden eines Abzweigrohrs an eine Hauptleitung
Method of connecting a branch pipe to a main

(30) Priorité: 12.09.1995 FR 9510677
(43) Date de publication de la demande: 12.03.1997
(73) Titulaire: GAZ DE FRANCE (SERVICE NATIONAL), F-75017 Paris (FR)
(72) Inventeur: Stringhetta, Sandrine, 92600 Asnières (FR)
(74) Mandataire: Lerner, François

(56) Documents cités:
- EP-A- 0 205 696
- EP-A- 0 235 917
- FR-A- 2 620 649
- FR-A- 2 648 538
- FR-A- 2 714 710
- US-A- 5 364 207

## Description

La présente invention se rapporte à un procédé pour raccorder une conduite de dérivation à une canalisation d'un réseau principal, afin de relier un nouvel usager, en opérant depuis la surface d'un puits d'accès.

Dans la suite, les termes "supérieur" et "inférieur" devront être considérés au sens de la hauteur d'élévation, étant entendu que le puits d'accès est supposé avoir été creusé sensiblement verticalement.

Les techniques traditionnelles de raccordement d'un usager à une conduite principale exigent pour un ouvrier de travailler au contact de la zone de raccordement. Il est donc nécessaire de creuser, autour de cette zone, une fosse relativement large permettant à une personne de s'y déplacer et d'y manier des outils aisément.

Bien que nécessaires au bon déroulement des travaux, les dimensions de ces fosses peuvent fréquemment se révéler gênantes, par exemple en encombrant un trottoir ou une chaussée. Elles peuvent même se révéler dangereuses, puisqu'une personne pourrait y tomber malencontreusement.

On cherche donc aujourd'hui à éviter autant que possible les puits d'accès de dimensions importantes.

Dans ce but, il a été proposé, par exemple dans FR-A-2 648 538, FR-A-2 620 649, et FR-A-2 714 710, différents outils permettant d'intervenir ponctuellement sur des canalisations, depuis la surface de puits d'accès pouvant être de faibles dimensions. US-A-5 364 207 décrit un procédé pour réaliser sur une canalisation d'égout en polyéthylène un raccordement pour un usager.

Il n'a cependant jusqu'à présent jamais été décrit une procédure complète de raccordement d'une conduite de dérivation à une conduite principale. L'invention a pour objet un tel procédé, étant précisé que pour en définir toutes les étapes il a fallu surmonter tant des problèmes purement techniques que des problèmes "psychologiques" auprès des ouvriers habitués depuis longtemps à une certaine technique de travail.

Pour répondre à ces exigences, le procédé selon l'invention se caractérise en ce qu'il comporte la succession d'étapes suivantes :
a) on réalise au moins un puits d'accès à la conduite principale (1), le puits d'accès (2) présentant des dimensions inférieures ou égales à celles nécessaires pour qu'au moins une personne puisse y travailler dedans, ledit puits d'accès étant raccordé à un passage en sous-sol dans lequel a été passée la conduite de dérivation, de sorte qu'une première extrémité de celle-ci débouche en surface, en haut du puits d'accès, ledit passage présentant une ouverture du côté opposé au puits d'accès, une seconde extrémité de ladite conduite de dérivation débouchant du côté de cette ouverture,
b) on raccorde la première extrémité de ladite conduite de dérivation à une prise de dérivation,
c) on positionne depuis la surface, dans le puits d'accès et au contact de la conduite principale, un bâti comportant des glissières de guidage laissant entre eux un passage, pour y faire coulisser des outils servant au raccordement de la prise de dérivation à la conduite principale et s'engageant en fond de puits d'accès sous la conduite principale,
d) on descend dans le puits d'accès, par coulissement entre les glissières de guidage du bâti, un premier outil de nettoyage de la conduite principale,
e) on nettoie avec ledit premier outil la conduite principale à l'endroit d'une zone de fixation de la prise de dérivation,
f) on retire ledit premier outil de nettoyage hors du puits d'accès,
g) on descend dans le puits d'accès, par coulissement le long des glissières du bâti, un second outil de positionnement et de fixation comportant un ensemble de fixation amovible lié au bâti et un fût creux, mobile par rapport à l'ensemble de fixation et présentant une partie supérieure et une partie inférieure, laquelle porte la prise de dérivation, et on tire simultanément sur la seconde extrémité de la conduite de dérivation,
h) on positionne et on lie de manière étanche à l'aide dudit second outil, ladite prise de dérivation à la conduite principale à l'endroit de la zone de fixation,
i) on raccorde de façon étanche la seconde extrémité de la conduite de dérivation à une unité de raccordement obturable,
j) on vérifie l'étanchéité entre la prise de dérivation et la conduite principale,
k) on introduit à travers ledit second outil de positionnement et de fixation, un troisième outil de raccordement permettant de mettre en communication ladite conduite de dérivation et ladite conduite principale,
l) on retire ledit troisième outil après établissement de la communication entre la conduite de dérivation et la conduite principale,
m) on retire ledit second outil,
n) on retire ledit bâti,
o) on rebouche le puits d'accès.

Ainsi il va être possible, en particulier grâce à une procédure unique d'intervention, de travailler à distance sur divers types de conduites, qu'elles soient en métal, en fonte ou en polyéthylène.

Il s'est cependant avéré que des problèmes particuliers se posaient pour le raccordement d'une conduite de dérivation à une conduite principale métallique, étant sous-entendu que l'on doit alors avoir recours à une prise de dérivation métallique.

Dans ce cas précis, il a fallu, en particulier, trouver une solution pour obtenir à la fois une communication étanche entre les deux conduites et une fixation efficace de la prise de dérivation sur la conduite principale. A cet effet, le procédé selon l'invention prévoit qu'avantageusement :
p) lors de l'étape (h) de positionnement de la prise de dérivation sur la conduite principale, on exerce une pression sur un joint contenu dans la prise, afin d'obtenir une fixation étanche de la prise de dérivation sur la conduite principale, et
q) après le retrait dudit troisième outil, on fixe définitivement la prise de dérivation sur ladite conduite principale.

De manière particulièrement avantageuse, on réalise l'étape p) susmentionnée en exerçant une force entre le second outil et le bâti par déplacement axial relatif du fût dudit second outil par rapport au bâti, et on réalise l'étape q) en disposant dans le second outil, de façon étanche mais librement glissante, un quatrième outil connectable de façon amovible à un embout de la prise de dérivation pour la fixation de celle-ci à la conduite principale.

D'autre part, il se révèle particulièrement intéressant, lorsqu'il s'agit d'une canalisation ou d'une prise métallique, de reconstituer une couche protectrice contre la corrosion analogue à celle enlevée lors de l'étape e) de nettoyage de la conduite principale. Pour cela, la solution de l'invention consiste en l'enrobage de la prise de dérivation. Mais, les opérations de contrôle du positionnement du moule par rapport à la prise étant très compliquées, le risque d'obtenir un enrobage de la prise insatisfaisant est grand. C'est pourquoi, avoir retiré le bâti, on procède à un enrobage de la prise de dérivation par un matériau thermodurcisseur :
r) en introduisant depuis la surface, dans ledit puits d'accès et en positionnant par rapport à par rapport à la conduite principale et à la conduite de dérivation, un cinquième outil de surmoulage comportant un dispositif de maintien et un coffrage renfermant un moule constitué de deux demi-coquilles,
s) en rapprochant les deux demi-coquilles l'une de l'autre,
t) en positionnant sous la conduite principale le dispositif de maintien lié au coffrage et en maintenant la conduite principale entre le moule et le dispositif de maintien,
u) en faisant couler ledit matériau d'enrobage à l'état liquide dans le moule fermé,
v) en laissant durcir ledit matériau, et
w) en retirant ledit cinquième outil.

Cette solution permet d'obtenir une bonne étanchéité du moule puisque celui-ci est correctement positionné par rapport à la prise de dérivation et à la conduite principale. De plus, l'enrobage constitue une protection mécanique contre des coups de pierres lors du rebouchage du puits ou contre des coups de pioche lors d'un nouveau creusement. De plus, cet enrobage complète l'étanchéité entre la prise et le milieu extérieur avec lequel elle est en contact et évite ainsi toute fuite de fluide circulant dans la conduite principale due au vieillissement des organes d'étanchéité. La matière d'enrobage, thermodurcissable, est avantageusement constituée par une résine en polyuréthane, polyester, époxyde ou analogue et complétée par un durcisseur.

Les différents avantages et caractéristiques du procédé selon l'invention apparaîtront plus clairement de la description qui suit du raccordement d'une prise de dérivation sur une conduite principale métallique, faite en référence aux dessins annexés dans lesquels :
- la figure 1 montre schématiquement un puits d'accès de petite dimension reliée à une unité de raccordement obturable,
- la figure 2 montre schématiquement la mise en place d'une conduite de dérivation dans le passage sous-terrain,

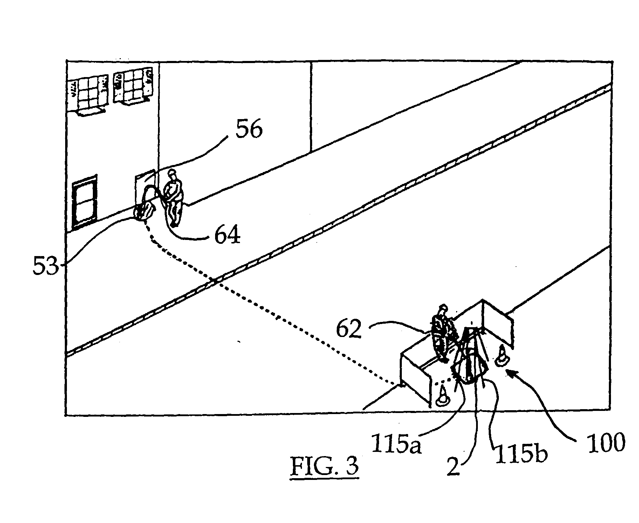

- la figure 3 montre la mise en place du bâti dans le puits d'accès,
- la figure 4 représente une vue en coupe d'un bâti suivant la ligne IV-IV de la figure 5,
- la figure 5 représente une vue de face du bâti,
- la figure 6 est une vue suivant la flèche VI de la figure 5,
- la figure 7 représente de côté un premier outil de nettoyage,
- la figure 8 représente de face le premier outil de nettoyage de la figure 7,
- la figure 9 représente une vue en coupe suivant la ligne IX-IX de la figure 8 du premier outil de nettoyage,
- la figure 10 représente un second outil de positionnement et de fixation,
- la figure 11 représente le second outil de positionnement et de fixation de la figure 10 en coupe suivant la ligne XI-XI de la figure 10,
- la figure 12 représente à échelle agrandie une prise positionnée sur une canalisation,
- la figure 13 représente à échelle agrandie un sas,
- la figure 14 représente à échelle agrandie un troisième outil de raccordement,
- la figure 15 représente à échelle agrandie un embout de fixation,
- la figure 16 représente à échelle agrandie des moyens d'obturation,
- la figure 17 représente à échelle agrandie des moyens de bouchage,
- la figure 18 représente un cinquième outil de surmoulage en vue de face en coupe selon la ligne XVIII-XVIII de la figure 20,
- la figure 19 représente le cinquième outil de surmoulage en vue de gauche en coupe selon la ligne XIX-XIX de la figure 18,
- la figure 20 représente le cinquième outil de surmoulage en vue de dessus.

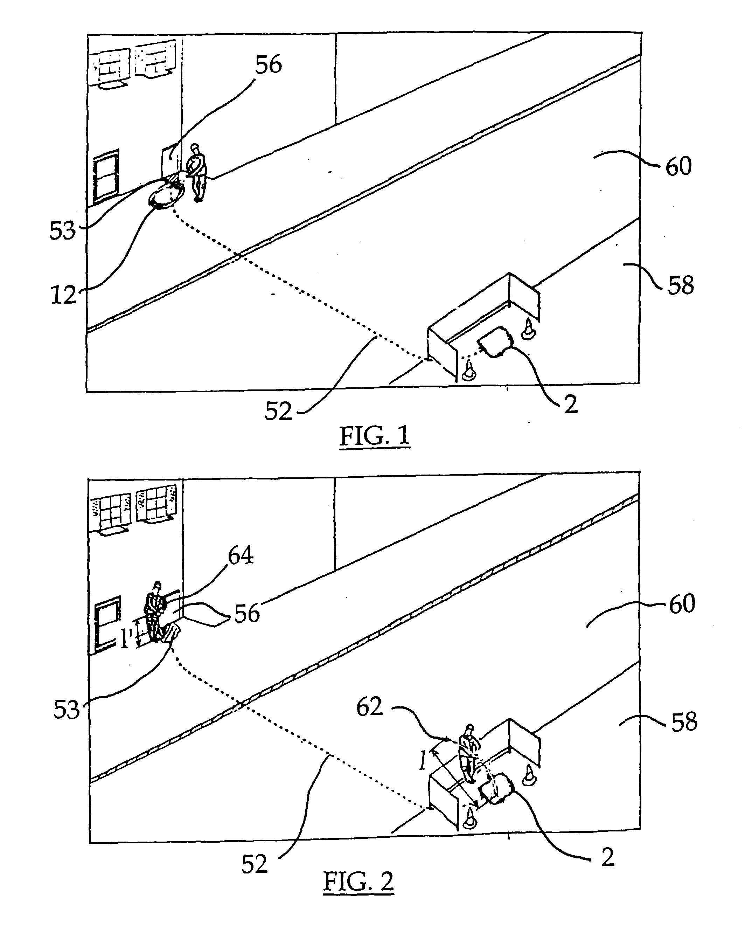

A la figure 1, on a représenté la mise en place du chantier, qui comprend un puits d'accès 2 de faibles dimensions, relié à un passage sous-terrain 52 qui débouche dans une ouverture 53 à la surface du sol. Comme on peut le voir sur cette figure, les dimensions réduites du puits d'accès 2 permettent de limiter l'étendue du chantier, qui n'empiète pas sur la chaussée 10 et n'occupe qu'une surface réduite du trottoir 58, situé du côté de la rue opposé au trottoir où a été ménagé le trou 53. Si cela s'avère possible, les dimensions du trou 1 seront inférieures habituellement prévues pour des interventions de même type où le personnel concerné doit descendre dans le puits d'accès (par exemple environ quarante centimètres de côté).

A la figure 2, une conduite de raccordement 12 a été introduite dans le passage 2, avec une surlongueur de sorte qu'une première extrémité 62 de longueur (l) de cette conduite débouche en surface, à l'extérieur du puits d'accès 2, et une seconde extrémité 64 de longueur (l') de la même conduite débouche par l'ouverture 53 à proximité d'une unité de raccordement obturable 56, également en surface, pouvant être constitué par un coffret de distribution relié à un usager.

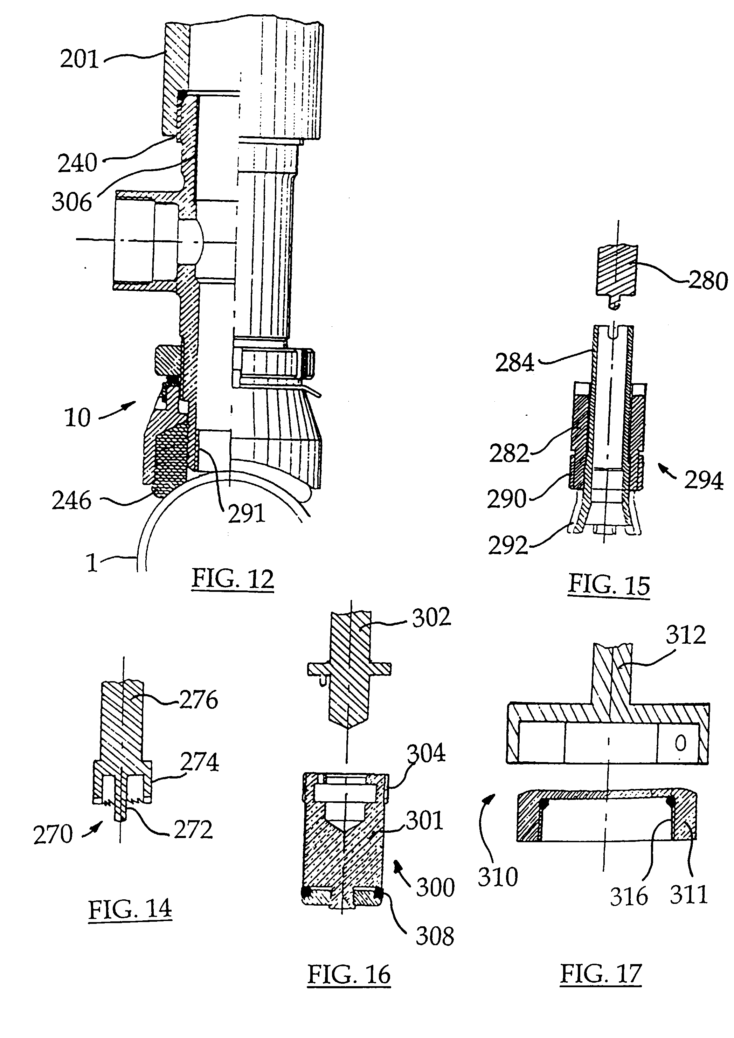

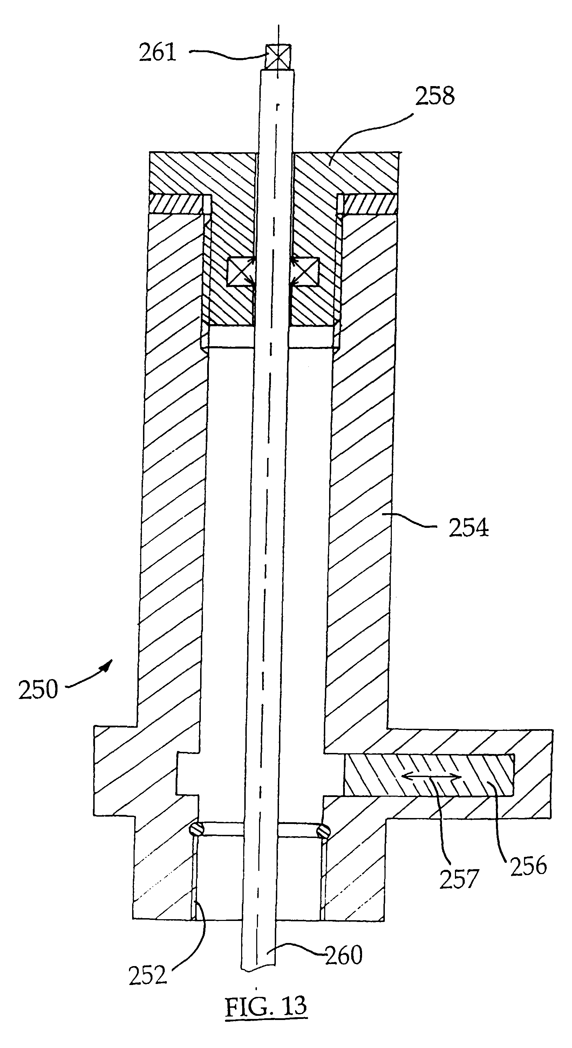

A ce stade du procédé, une prise de dérivation du type SEIG (marque déposée), telle que celle représentée à la figure 12, est reliée selon une technique classique à la première extrémité 62 de la conduite de dérivation 12(soudage, vissage...).

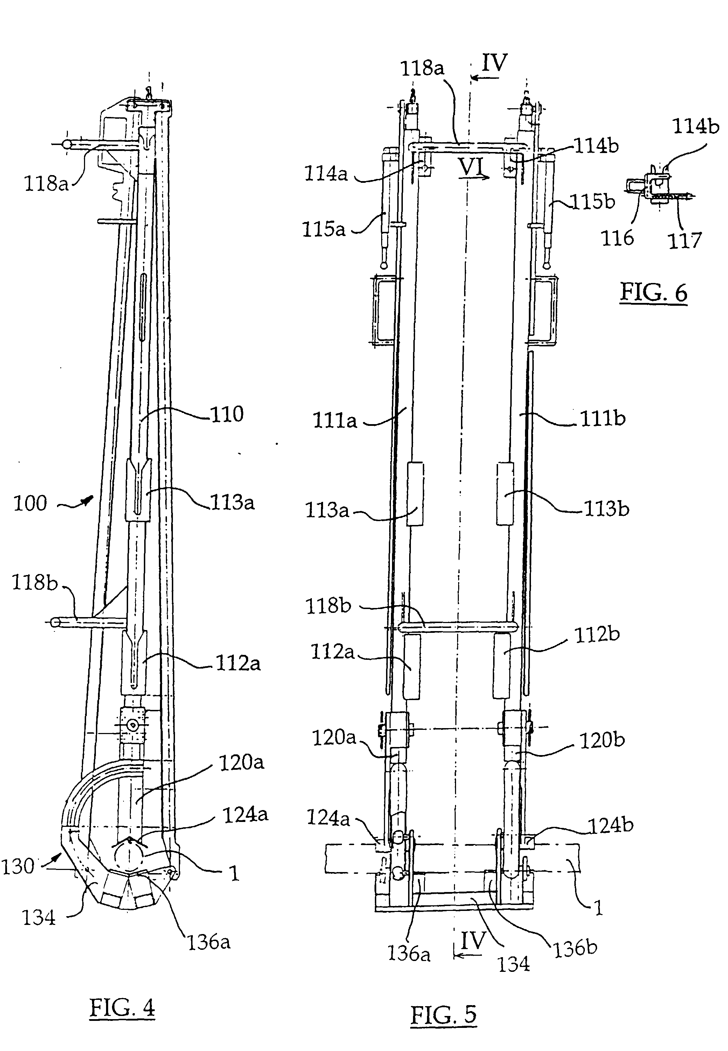

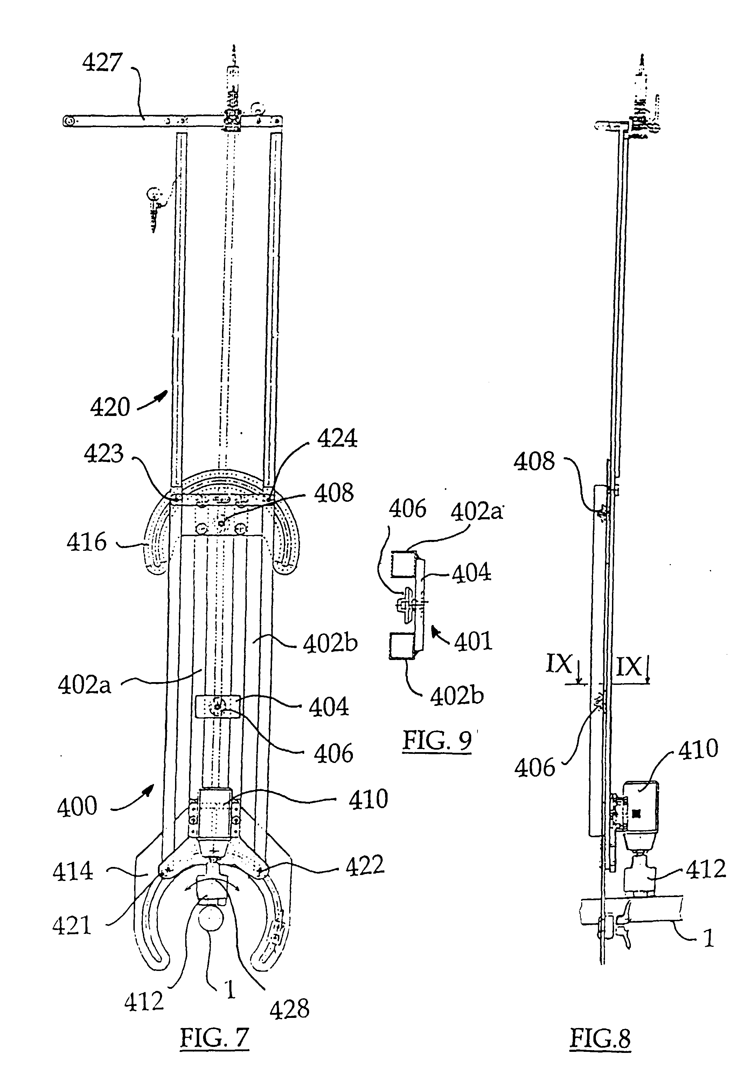

En figures 4 et 5, on voit illustrée une réalisation de bâti 100 comprenant un premier cadre vertical support 110 comportant deux montants parallèles 111a, 111b reliés par des entretoises 118a, 118b. Ce bâti présente une partie inférieure, une partie intermédiaire et une partie supérieure. Le cadre possède des glissières de guidage 112a, 112b, 113a, 113b, 114a, 114b fixés sur les montants verticaux 111a, 111b en partie inférieure, en partie intermédiaire et en partie supérieure. Ces glissières doivent permettre de faire glisser verticalement des outils servant au raccordement d'une canalisation 1 à la conduite de dérivation 12, le long des deux montants 111a, 111b de la partie supérieure vers la partie inférieure du puits d'accès où se trouve la zone de l'intervention. Les glissières de guidage supérieures 114a, 114b possèdent, en outre, des moyens de fixation constitués par des goupilles d'arrêt 116 munies d'un ressort de rappel 117 tel qu'illustré à la figure 6.

Des pieds télescopiques (par exemple quatre dont deux sont illustrés en figure 5) 115a, 115b sont fixés à la partie supérieure du cadre 110 sur chacun des montants 111a et 111b pour assurer une stabilisation du bâti 100 par rapport au sol lorsque le bâti 100 est mis en place dans le puits d'accès.

A la partie inférieure du premier cadre 110, des bras 120a, 120b coulissant par rapport aux montants 111a et 111b, ajustables verticalement en position pour s'adapter aux différents diamètres des canalisations à enserrer, se terminent en partie inférieure par des premiers vés inversés 124a, 124b destinés à reposer sur la canalisation.

Le bâti 100 comprend également en partie inférieure du cadre un dispositif d'appui 130 comprenant un sabot 134 présentant deux parties en forme de seconds vés 136a, 136b destinés à venir en regard des premiers vés 124a, 124b, afin de réaliser une liaison précise et fiable avec la canalisation 1 positionnée entre eux.

Avant d'entamer les étapes du raccordement proprement dit de la canalisation principale 1 et de la conduite de dérivation 12, il est nécessaire de nettoyer la conduite principale 1 au niveau de la zone de fixation de la prise de dérivation 10.

En particulier, lorsque la conduite principale 1 est en métal, celle-ci est en général recouverte d'une couche de résine protectrice qu'il va falloir éliminer pour pouvoir positionner la prise de dérivation 10 sur la conduite principale 1 de façon satisfaisante.

Pour procéder à cette étape de nettoyage de la conduite principale 1, on utilise un premier outil de nettoyage schématisé en figures 7, 8 et 9. Ce premier outil de nettoyage 400 comprend un second cadre vertical de support 401, un ensemble de pivotement 420, un moteur 410 et une brosse 412 montés sur l'ensemble de pivotement 420.

Ce premier outil de nettoyage est destiné à être introduit par la partie supérieure du bâti 100, le second cadre étant maintenu sur l'un des montants parallèles 111a, 111b. En effet, le second cadre 401 comportant deux barres 402a, 402b reliées entre elles par une entretoise 404 et deux disques de maintien 406, 408 est alors positionné autour deux glissières de guidage 112a, 113a, 112b, 113b située sur l'un des montants parallèles 111a, 111b en parties intermédiaire et inférieure de celui-ci, tandis que les disques 402, 403 sont introduits à l'intérieur desdites glissières de guidage 112a, 113a, 112b, 113b du bâti 100.

Outre les barres 402a, 402b, l'entretoise 404 et les deux disques de maintien 406, 408, le second cadre comprend également deux glissières circulaires 414, 416 placées dans un même plan vertical. L'ensemble de pivotement 420 possède une forme de premier parallélogramme dont les axes de rotation 421, 422, 423, 424 coulissant par paire dans l'une des glissières 414, 416 lui permettent de se déformer.

La déformation de l'ensemble de pivotement 420 engendre un mouvement pouvant alors être commandé depuis le niveau du sol par une barre de manoeuvre 427. Lors de ce mouvement, la brosse 412 se déplace en arc de cercle autour de la canalisation comme illustré par la double flèche 428. Le double mouvement de la brosse 412 sur elle-même grâce à un moteur 410 et autour de la canalisation 1 permet de décaper extérieurement ladite canalisation 1, d'enlever une épaisseur constante de résine, ainsi que, si nécessaire, une faible épaisseur de la conduite elle-même, sur le dessus et les côtés de la conduite principale 1, c'est-à-dire à l'endroit d'une zone de fixation de la prise de dérivation 10.

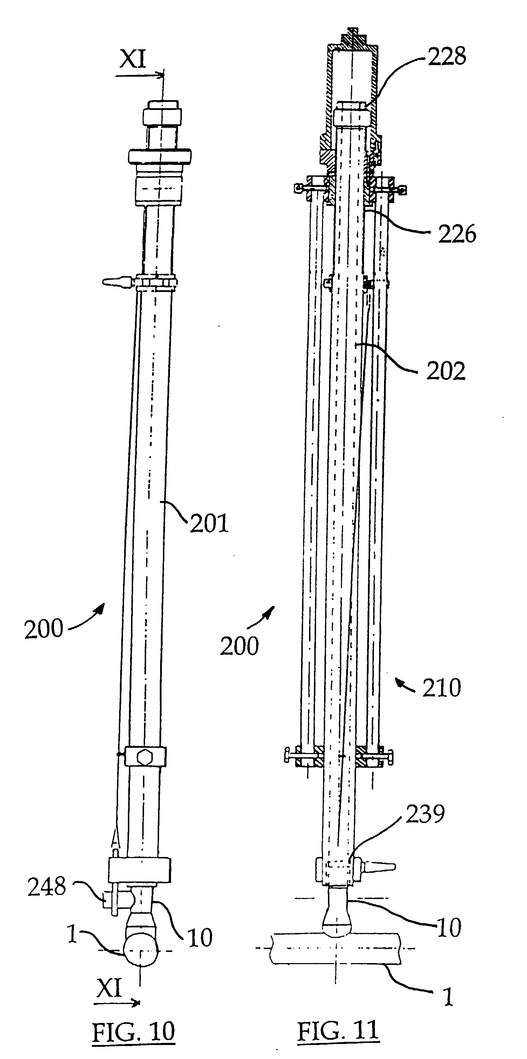

Lorsque la conduite principale 1 est nettoyée, on retire le premier outil de nettoyage 400 hors du puits d'accès 2, la première extrémité 62 de la conduite de dérivation 12 reliée à la prise de dérivation 10, est descendue dans le puits d'accès 2, au moyen d'un second outil de positionnement et de fixation, représenté en figures 10, 11 et 12. Pour assurer un positionnement convenable de la prise 10 sur la conduite principale 1, on tire simultanément sur la seconde extrémité 64 de la conduite de dérivation 12 débouchant par l'ouverture 53, pour rattraper la "surlongueur" correspondante (1).

Le second outil de positionnement et de fixation 200 représenté en figures 10, 11 et 12 comprend un fût 201 creux possédant sur toute sa longueur un évidement intérieur 202. La partie inférieure de cet évidement comporte des moyens de maintien temporaire de la prise 10, ici constitués par un taraudage 239 destiné à recevoir le filetage 240 de la partie supérieure de la prise de branchement 10.

Le fût 201 est en liaison glissière hélicoïdale par rapport à un ensemble de fixation 210 grâce à un filetage 226 réalisé sur l'extérieur du fût 201, tandis que ledit ensemble de fixation 210 est immobilisé par rapport au bâti 100 par l'intermédiaire des goupilles d'arrêt 116 dudit bâti après introduction par coulissement le long des glissières 112a, 112b, 113a, 113b, 114a, 114b du bâti, du second outil de positionnement et de fixation 200.

La partie supérieure de la prise 10 est fixée de manière amovible au second outil de positionnement et de fixation 200 par exemple par vissage dans le filetage 239 réalisé en partie inférieure de l'évidement intérieur 202, comme illustré en figures 10, 11 et 12. La prise 10 étant en contact avec la canalisation 1, on fait tourner le fût 201 par rapport à l'ensemble de fixation 210, ce qui engendre un déplacement axial dudit fût 201 par rapport au bâti, on exerce ainsi un effort entre un joint d'étanchéité 246 contenu dans la prise de dérivation 10 et une canalisation 1 dans laquelle circule un fluide.

L'effort entre la prise 10 et la canalisation 1, et plus précisément entre le joint 246 et la canalisation 1, étant appliqué, on vient positionner un sas 250 par vissage de la partie inférieure taraudée 252 dudit sas sur l'extrémité supérieure filetée 228 du fût 201. Ce sas permettra de travailler en charge de fluide, une fois la communication établie entre la conduite de dérivation 12 et la canalisation principale 1. Ce système de sas 250 représenté en figure 13 peut, par exemple, être emprunté à une machine "Piedfort" (marque déposée) modèle M80. Le sas 250 comprend un corps 254, une vanne constituée par un opercule 256 mobile en translation tel qu'illustré par la double flèche 257 et un bouchon 258 vissé sur la partie supérieure. Ce bouchon 258 peut être traversé par une tige 260 possédant en partie supérieure un embout carré 261 afin de faciliter sa manoeuvre.

On vérifie l'étanchéité du positionnement, puis on procède à la mise en communication de la canalisation principale 1 avec la conduite de dérivation 12, après avoir éventuellement retaillé à longueur la conduite de dérivation 12 et l'avoir raccordé de façon étanche à l'unité de raccordement 56.

Lorsque le sas est mis en place, on introduit à travers l'évidement intérieur 202 du second outil 200, un troisième outil 270 de perçage de la conduite principale 1. En figure 14, est illustré un exemple d'outil de perçage 270. Cet outil possède une tige 276 dont l'extrémité inférieure comporte un foret de centrage 272 et une scie cloche 274, et dont l'extrémité supérieure est conforme à celle de la tige 260, un carré permettant la commande de la rotation de l'outil de perçage 270.

Lorsque la conduite est percée, on retire le troisième outil, et on procède à la fixation définitive de la prise 10 sur la conduite principale 1. Pour cela, on introduit de façon étanche, mais librement glissante, à travers l'évidement intérieur 202 du second outil 200 un quatrième outil 280, illustré en figure 15, connectable de façon amovible à un embout de serrage 294 de la prise de dérivation 10, lequel comprend un manchon 282 muni d'ailettes 292 et un mandrin 284.

Après vissage de l'embout de serrage à l'intérieur de la prise 10, par l'intermédiaire du filetage 290 du manchon 282 et du taraudage 291 de la prise 10, à l'aide du quatrième outil on dévisse le mandrin 284 par rapport au manchon 282 pour provoquer l'écartement des ailettes 292 qui viennent se plaquer contre l'intérieur de la canalisation. La prise 10 est alors fixée de façon étanche à la canalisation 1.

On retire ensuite le quatrième outil, avant de vérifier une nouvelle fois l'étanchéité entre la conduite de dérivation 12 et la conduite principale 1.

En figure 16, on voit illustré des moyens d'obturation 300 comportant un obturateur 301 et un premier outil de mise en place 302 permettant le vissage dudit obturateur 301 sur la prise 10 par l'intermédiaire du filetage 304 de l'obturateur 301 et du taraudage 306 de la prise 10 représentée en figure 12. Le joint 308 assure l'étanchéité entre la prise 10 et l'obturateur 301.

En figure 17, on voit illustré des moyens de bouchage 310 comportant un bouchon extérieur 311 possédant un taraudage 316 et un deuxième outil de mise en place 312 dans lequel est placé le bouchon extérieur 311. Une fois le bouchon extérieur 311 et le deuxième outil de mise en place 312 introduit dans le fût, on vient visser le bouchon extérieur 311 sur la prise 10 par l'intermédiaire du taraudage 316 du bouchon extérieur 311 et du filetage 240 de la prise 10 représenté en figure 12.

On peut ensuite procéder au retrait hors du puits d'accès du second outil de positionnement et de fixation 200 puis du bâti 100.

Avant de refermer le puits d'accès 2, il reste généralement une dernière étape au cours de laquelle il s'agit de former l'équivalent de la couche de résine protectrice éliminée par brossage au début de l'intervention.

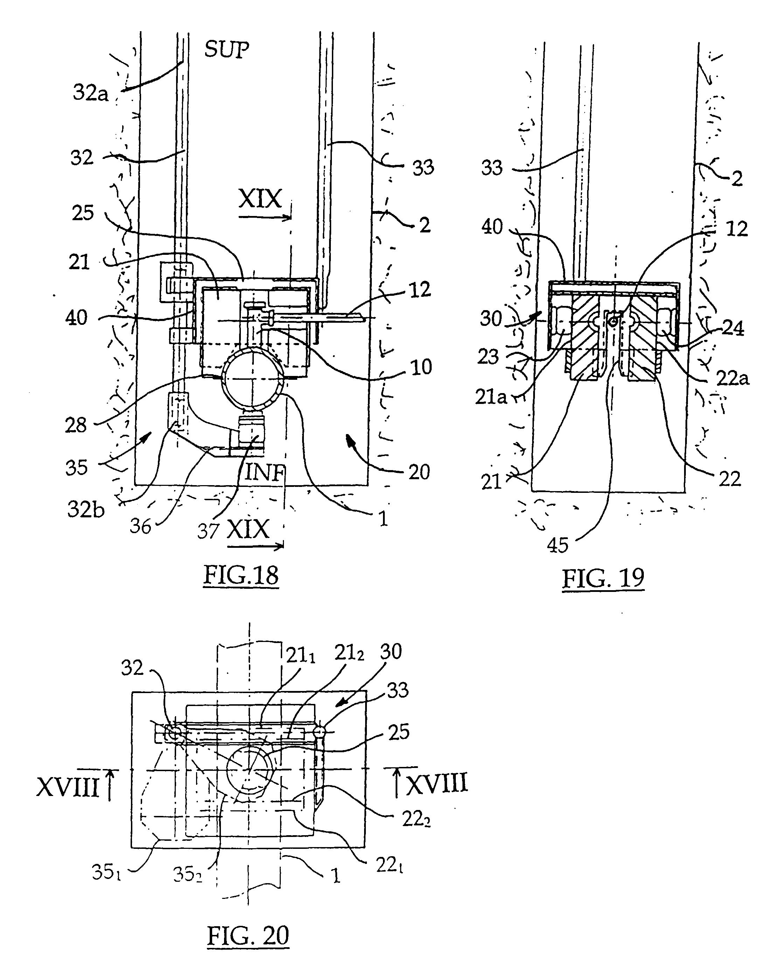

On utilise pour cela un cinquième outil. Aux figures 18, 19 et 20, on voit représenté un puits d'accès 2, un cinquième outil de surmoulage 20 selon l'invention présentant des extrémités supérieure et inférieure repérées respectivement SUP et INF sur la figure 1, et une canalisation 1 sur laquelle est fixée une prise 10 à laquelle est raccordée une conduite de dérivation 12. Ce cinquième outil de surmoulage 20 comporte un support 30, un moule comportant deux demi-coquilles 21, 22, des moyens 23, 24 pour déplacer les deux demi-coquilles et un orifice de remplissage 25 ménagé à travers le support et les deux demi-coquilles.

Le support 30 comprend un coffrage 40, deux montants de guidage 32, 33, l'un fixe et l'autre lié de façon pivotante au coffrage 40 en un endroit intermédiaire entre une extrémité supérieure 32a et une extrémité inférieure 32b. Ce coffrage 40 est ouvert, et est ici constitué de plaques soudées formant parois latérales dont l'une comporte une rainure 45 à travers laquelle passe la conduite de dérivation 12.

Les deux demi-coquilles 21, 22 sont symétriques l'une de l'autre par rapport à leur plan de joint commun, possèdent en partie inférieure un creux en forme de portion de cylindre 28 complémentaire de celle de la canalisation 1 et reproduisent sensiblement la forme en creux de la prise de branchement 10. Elles sont mises en place dans le coffrage 40 en appui contre des moyens 23, 24 pour les déplacer, ici constitués par un premier 23 et un second 24 vérin pneumatique avantageusement alimentés par de l'air comprimé acheminé par l'intérieur du tube fixe 33.

L'évidement 28 en partie inférieure du moule 21, 22 de forme complémentaire de celle de la canalisation 1 et la rainure 45 disposée sur l'une des parois latérales du coffrage 40 permettent de facilement positionner, depuis la partie supérieure du puits d'accès à l'aide des montants 32, 33, le coffrage 40 par rapport à la canalisation principale 1 et à la conduite de dérivation 12, et donc par rapport à la prise de raccordement 10.

Le montant mobile 32 comporte en partie inférieure 32b des moyens 35 pour maintenir le coffrage 40 par rapport à la canalisation 1. Ces moyens de maintien 35 comprennent un sabot de soutien 36 et des moyens 37 disposés sur ledit sabot de soutien 36 en regard dudit coffrage 40, pour exercer une pression entre la canalisation 1 et le moule 21, 22, lesdits moyens étant ici constitués par un troisième vérin pneumatique 37.

Après introduction des demi-coquilles 21, 22 dans le coffrage 40, descente du cinquième outil de surmoulage 20 depuis la surface dans le puits d'accès 2 et positionnement dudit coffrage 40 par rapport à la canalisation 1 et à la conduite de dérivation 12, les deux demi-coquilles 21, 22 sont amenées au contact l'une de l'autre par alimentation en air comprimé des premier et deuxième vérins 23, 24. Les faces 21a, 22a des demi-coquilles en contact avec lesdits premier et deuxième vérins pneumatiques sont déplacées depuis les positions 21₁, 22₁ vers les positions 21₂, 22₂ représentées en figure 20. On déplace alors les moyens de maintien 35 entre les positions 35₁ et 35₂ représentées en figure 21, par rotation du montant mobile 32 par rapport au coffrage 40, de sorte que lesdits moyens de maintien 35, en particulier le sabot de soutien 36, viennent s'engager sous ladite canalisation 1. La mise sous pression du troisième vérin 37 serre la canalisation entre ledit troisième vérin et le moule 21, 22 afin de maintenir le coffrage 40 par rapport à la canalisation 1.

Le moulage d'un matériau thermodurcissable depuis la partie supérieure du puits est facilité en introduisant dans l'orifice de remplissage 25 un tube (non représenté). Celui-ci ne recouvre que la partie supérieure de la canalisation 1.

## Revendications

1. Procédé pour raccorder depuis la surface une conduite de dérivation (12) à une conduite principale (1), dans lequel
a) on réalise au moins un puits d'accès (2) à la conduite principale (1), le puits d'accès (2) présentant des dimensions inférieures ou égales à celles nécessaires pour qu'au moins une personne puisse y travailler dedans, ledit puits d'accès (2) étant raccordé à un passage (52) en sous-sol dans lequel a été passée la conduite de dérivation (12), de sorte qu'une première extrémité (62) de celle-ci débouche en surface, en haut de puits d'accès (2), ledit passage (52) présentant une ouverture (53) du côté opposé au puits d'accès (2), une seconde extrémité (64) de ladite conduite de dérivation (12) débouchant du côté de cette ouverture (53),
b) on raccorde la première extrémité (62) de ladite conduite de dérivation (12) à une prise de dérivation (10),
c) on positionne depuis la surface, dans le puits d'accès (2) et au contact de la conduite principale (1), un bâti (100) comportant des glissières de guidage (112a, 112b, 113a, 113b, 114a, 114b) laissant entre eux un passage, pour y faire coulisser des outils servant au raccordement de la prise de dérivation (10) à la conduite principale (1) et s'engageant en fond du puits d'accès (2) sous la conduite principale (1),
d) on descend dans le puits d'accès (2), par coulissement entre les glissières (112a, 112b, 113a, 113b, 114a, 114b) du bâti (100), un premier outil (400) de nettoyage de la conduite principale (1),
e) on nettoie avec ledit premier outil (400) la conduite principale (1) à l'endroit d'une zone de fixation de la prise de dérivation (10),
f) on retire ledit premier outil (400) de nettoyage hors du puits d'accès (2),
g) on descend dans le puits d'accès (2), par coulissement le long des glissières (112a, 112b, 113a, 113b, 114a, 114b) du bâti (100), un second outil de positionnement et de fixation (200) comportant un ensemble de fixation amovible (210) lié au bâti (100) et un fût (201) creux, mobile par rapport à l'ensemble de fixation (210) et présentant une partie supérieure et une partie inférieure, laquelle porte la prise de dérivation (10), et on tire simultanément sur la seconde extrémité (64) de la conduite de dérivation (12),
h) on positionne et on lie de manière étanche à l'aide dudit second outil (200), ladite prise de dérivation (10) à la conduite principale (1) à l'endroit de la zone de fixation,
i) on raccorde de façon étanche la seconde extrémité (64) de la conduite de dérivation (12) à une unité de raccordement (56) obturable,
j) on vérifie l'étanchéité entre la prise de dérivation (10) et la conduite principale (1),
k) on introduit à travers ledit second outil de positionnement et de fixation (200), un troisième outil (270) de raccordement permettant de mettre en communication ladite conduite de dérivation (12) et ladite conduite principale (1),
l) on retire ledit troisième outil (270) après établissement de la communication entre la conduite de dérivation (12) et la conduite principale (1),
m) on retire ledit second outil (200),
n) on retire ledit bâti (100),
o) on rebouche ledit puits d'accès(2).

2. Procédé selon la revendication 1, dans lequel on utilise une prise de dérivation (10) métallique, caractérisé en ce que :
p) lors de l'étape (h) de positionnement de la prise de dérivation (10) sur la conduite principale (1), on exerce une pression sur un joint (246) contenu dans la prise (10), afin d'obtenir une fixation étanche de la prise de dérivation (10) sur la conduite principale (1), et
q) après le retrait dudit troisième outil (270), on fixe la prise de dérivation (10) sur ladite conduite principale (1).

3. Procédé selon la revendication 2, caractérisé en ce que :
- on réalise l'étape p) en exerçant une force entre le second outil (200) et le bâti (100) par déplacement axial relatif du fût (201) dudit second outil (200) par rapport au bâti (100),
- on réalise l'étape q) en disposant, dans le second outil (200), de façon étanche mais librement glissante, un quatrième outil (280) connectable de façon amovible à un embout (294) de la prise de dérivation (10) pour la fixation de celle-ci à la conduite principale (1).

4. Procédé selon l'une quelconque des revendications précédentes, caractérisé en ce qu'après avoir retiré le bâti (100), on procède à un enrobage de la prise de dérivation (10) par un matériau thermodurcisseur :
r) en introduisant depuis la surface, dans ledit puits d'accès (2) et en positionnant par rapport à par rapport à la conduite principale (1) et à la conduite de dérivation (12), un cinquième outil de surmoulage (20) comportant un dispositif de maintien (35) et un coffrage (40) renfermant un moule constitué de deux demi-coquilles (21, 22),
s) en rapprochant les deux demi-coquilles (21, 22) l'une de l'autre,
t) en positionnant sous la conduite principale (1) le dispositif de maintien (35) lié au coffrage (40) et en maintenant la conduite principale (1) entre le moule (21, 22) et le dispositif de maintien (35),
u) en faisant couler ledit matériau d'enrobage à l'état liquide dans le moule (21, 22) fermé,
v) en laissant durcir ledit matériau, et
w) en retirant ledit cinquième outil (20).

## Patentansprüche

1. Verfahren zum Verbinden einer Abzweigleitung (12) mit einer Hauptleitung (1) von der Oberfläche aus, in welchem man
a) mindestens einen Zugangsschacht (2) realisiert, der kleinere oder gleiche Abmessungen wie diese hat, die notwendig sind, damit mindestens eine Person dort drin arbeiten kann, wobei der Zugangsschacht (2) mit einem Durchgang (52) im Unterboden verbunden ist, in welchen die Abzweigleitung (12) derart eingeführt wurde, daß ein erstes Ende (62) derselben an der Oberfläche oben an dem Zugangsschacht (2) mündet, wobei der Durchgang (52) auf der dem Zugangsschacht (2) entgegengesetzten Seite eine Öffnung (53) aufweist und wobei ein zweites Ende (64) der Abzweigleitung (12) auf der Seite dieser Öffnung (53) mündet,
b) das erste Ende (62) der Abzweigleitung (12) mit einem Abzweiganschluß (10) verbindet,
c) von der Oberfläche aus in den Zugangsschacht (2) und in Kontakt mit der Hauptleitung (1) ein Gehäuse (100) positioniert, das Führungsgleitschienen (112a, 112b, 113a, 113b, 114a, 114b) aufweist, die zwischen sich einen Durchgang belassen, um dort die Werkzeuge gleiten zu lassen, welche zur Verbindung des Abzweiganschlusses (10) mit der Hauptleitung (1) dienen und am Boden des Zugangsschachtes (2) unter der Hauptleitung (1) in Eingriff kommen,
d) durch Gleiten zwischen den Gleitschienen (112a, 112b, 113a, 113b, 114a, 114b) des Gehäuses (100) ein erstes Reinigungswerkzeug (400) für die Hauptleitung (1) in den Zugangsschacht (2) herabläßt;
e) mit dem ersten Werkzeug (400) die Hauptleitung (1) an der Stelle einer Befestigungszone des Abzweiganschlusses (10) reinigt,
f) das erste Reinigungswerkzeug (400) aus dem Zugangsschacht (2) zurückzieht,
g) durch Gleiten entlang den Gleitschienen (112a, 112b, 113a, 113b, 114a, 114b) des Gehäuses (100) ein zweites Werkzeug (200) zum Positionieren und Befestigen in den Zugangsschacht (2) herabläßt, welches einen abnehmbaren Befestigungsaufbau (210), der mit dem Gehäuse (100) verbunden ist, und einen hohlen Schaft (201) aufweist, der bezüglich des Befestigungsaufbaus (210) beweglich ist und einen oberen Teil und einen unteren Teil aufweist, welcher den Abzweiganschluß (10) trägt, und man gleichzeitig an dem zweiten Enden (64) der Abzweigleitung (12) zieht,
h) den Abzweiganschluß (10) an der Hauptleitung (1) positioniert und ihn in dichter Weise mit Hilfe des zweiten Werkzeuges (200) mit der Hauptleitung (1) an der Stelle der Befestigungszone verbindet,
i) in dichter Weise das zweite Ende (64) der Abzweigleitung (12) mit einer verschließbaren Verbindungseinheit (56) verbindet,
j) die Dichtigkeit zwischen dem Abzweiganschluß (10) und der Hauptleitung (1) herstellt,
k) quer durch das zweite Werkzeug (200) zum Positionieren und Befestigen ein drittes Verbindungswerkzeug (270) einführt, welches erlaubt, die Abzweigleitung (12) und die Hauptleitung (1) miteinander in Verbindung zu bringen,
l) das dritte Werkzeug (270) nach dem Einrichten der Verbindung zwischen der Abzweigleitung (12) und der Hauptleitung (1) zurückzieht,
m) das zweite Werkzeug (200) zurückzieht,
n) das Gehäuse (100) zurückzieht,
o) den Zugangsschacht (2) wieder versperrt.

2. Verfahren nach Anspruch 1, wobei man einen metallischen Abzweiganschluß (10) verwendet, dadurch gekennzeichnet, daß:
p) man während des Schrittes h) zum Positionieren des Abzweiganschlusses (10) an der Hauptleitung (1) auf die Verbindung (246), welche in dem Anschluß (10) enthalten ist, einen Druck ausübt, um eine dichte Befestigung des Abzweiganschlusses (10) an der Hauptleitung (1) zu erhalten, und
q) man nach dem Zurückziehen des dritten Werkzeuges (270) den Abzweiganschluß (10) an der Hauptleitung (1) befestigt.

3. Verfahren nach Anspruch 2, dadurch gekennzeichnet, daß:
- man den Schritt p) ausführt, indem eine Kraft zwischen dem zweiten Werkzeug (200) und dem Gehäuse (100) durch relative, axiale Verschiebung des Schaftes (201) des zweiten Werkzeuges (200) bezüglich des Gehäuses (100) ausgeübt wird,
- man den Schritt q) ausführt, indem in dem zweiten Werkzeug (200) in dichter Weise, aber frei gleitend, ein viertes Werkzeug (280) angeordnet wird, das in abnehmbarer Weise mit einem Ansatzstück (294) des Abzweiganschlusses (10) für die Befestigung desselben an der Hauptleitung (1) verbindbar ist.

4. Verfahren nach einem der vorhergehenden Ansprüche, dadurch gekennzeichnet, daß man, nachdem das Gehäuse (100) zurückgezogen wurde, eine Ummantelung des Abzweiganschlusses (10) durch ein in Wärme aushärtendes Material vornimmt:
r) unter Einführung eines fünften Abformungswerkzeuges (20) von der Oberfläche aus in den Zugangsschacht (2) und unter Positionierung desselben bezüglich der Hauptleitung (1) und der Abzweigleitung (12), wobei das Werkzeug eine Haltevorrichtung (35) und eine Schalung (40) aufweist, die eine Form einschließt, welche aus zwei Matrizen (21, 22) besteht,
s) unter Annäherung der zwei Matrizen (21, 22) aneinander,
t) unter Positionieren der mit der Schalung (40) verbundenen Haltevorrichtung (35) unter die Hauptleitung (1) und unter Halten der Hauptleitung (1) zwischen der Form (21, 22) und der Haltevorrichtung (35),
u) unter Fließenlassen des Ummantelungsmaterials in flüssigem Zustand in die geschlossene Form (21, 22),
v) unter Erhärtenlassen des Materials und
w) unter Zurückziehen des fünften Werkzeuges (20).

## Claims

1. Method of connecting a branch pipe (12) to a main pipe (1), from the ground surface, in which
a) at least one access pit (2) to the main pipe (1) is produced, the access pit (2) having dimensions which are less than or equal to those required for at least one person to be able to work therein, the said access pit (2) being connected to an underground passage (52) into which the branch pipe (12) has been passed, so that a first end (62) thereof emerges at the surface, from the top part of the access pit (2), the said passage (52) having an opening (53) at the opposite side to the access pit (2), a second end (64) of the said branch pipe (12) emerging at that opening (53),
b) the first end (62) of the said branch pipe (12) is connected to a branch connector (10),
c) from the surface there is positioned in the access pit (2), in contact with the main pipe (1), a frame (100) comprising guide rails (112a, 112b, 113a, 113b, 114a, 114b) which leave a passage between them, allowing tools which serve to connect the branch connector (10) to the main pipe (1) and which engage at the bottom of the access pit (2) beneath the main pipe (1) to be slid therein,
d) a first tool (400) for cleaning the main pipe (1) is lowered into the access pit (2) by sliding between the rails (112a, 112b, 113a, 113b, 114a, 114b) of the frame (100),
e) using the said first tool (400), the main pipe (1) is cleaned at the location of a fixing zone for the branch connector (10),
f) the said first cleaning tool (400) is withdrawn from the access pit (2),
g) there is lowered into the access pit (2), by sliding along the rails (112a, 112b, 113a, 113b, 114a, 114b) of the frame (100), a second tool for positioning and fixing (200) comprising a removable fixing assembly (210) connected to the frame (100) and a hollow shaft (201) which is movable relative to the fixing assembly (210) and has an upper portion and a lower portion, which carries the branch connector (10), and the second end (64) of the branch pipe (12) is simultaneously pulled,
h) the said branch connector (10) is positioned and joined in a tight manner, by means of the said second tool (200), to the main pipe (1) at the location of the fixing zone,
i) the second end (64) of the branch pipe (12) is connected in a tight manner to a closable connecting unit (56),
j) tightness between the branch connector (10) and the main pipe (1) is verified,
k) a third tool (270) for connecting is introduced through the second tool for positioning and fixing (200), allowing the said branch pipe (12) and the said main pipe (1) to communicate with each other,
l) the said third tool (270) is withdrawn after communication between the branch pipe (12) and the main pipe (1) has been established,
m) the said second tool (200) is withdrawn,
n) the said frame (100) is withdrawn,
o) the said access pit (2) is filled in again.

2. Method according to claim 1, in which a metal branch connector (10) is used, characterised in that:
p) during step h) of positioning the branch connector (10) on the main pipe (1), pressure is exerted on a seal (246) contained in the connector (10) in order to obtain tight fixing of the branch connector (10) to the main pipe (1), and
q) after the said third tool (270) has been removed, the branch connector (10) is fixed to the said main pipe (1).

3. Method according to claim 2, characterised in that:
- step p) is carried out by exerting a force between the second tool (200) and the frame (100) by relative axial displacement of the shaft (201) of the said second tool (200) with respect to the frame (100),
- step q) is carried out by providing in the second tool (200), in a tight but freely sliding manner, a fourth tool (280) which can be removably connected to a joining piece (294) of the branch connector (10) in order to fix the latter to the main pipe (1).

4. Method according to any one of the preceding claims, characterised in that after the frame (100) has been withdrawn, the branch connector (10) is covered with a thermosetting material by:
r) introducing into the said access pit (2), from the surface, a fifth tool for moulding (20) comprising a holding device (35) and a casing (40) containing a mould formed by two half-moulds (21, 22), and positioning the said fifth tool for moulding (20) relative to the main pipe (1) and the branch pipe (12),
s) bringing the two half-moulds (21, 22) together,
t) positioning the holding device (35), connected to the casing (40), beneath the main pipe (1) and maintaining the main pipe (1) between the mould (21, 22) and the holding device (35),
u) pouring the said covering material in the liquid state into the closed mould (21, 22),
v) allowing the said material to harden, and
w) withdrawing the said fifth tool (20).
